# EUROPÄISCHE PATENTSCHRIFT

(11) **EP 0 527 375 B1**
(45) Veröffentlichungstag und Bekanntmachung des Hinweises auf die Patenterteilung: **14.12.1994**
(21) Anmeldenummer: 92112748.6
(22) Anmeldetag: 25.07.1992
(51) Int. Cl.: F16D 3/00, F16D 3/76

(54) **Vorrichtung zum mechanischen Übertragen eines Drehmomentes**
Apparatus for mechanical torque transmission
Dispositif pour la transmission mécanique d'un couple

(30) Priorität: 14.08.1991 DE 9110049 U
(43) Veröffentlichungstag der Anmeldung: 17.02.1993
(73) Patentinhaber: Hackforth GmbH & Co. KG, D-44653 Herne (DE)
(72) Erfinder: Falz, Ulrich, W-4600 Dortmund 30 (DE); Walter, Jürgen, W-4358 Haltern 7 (DE); Lunke, Manfred, W-7994 Langenargen (DE)
(74) Vertreter: Finkener und Ernesti Patentanwälte

(56) Entgegenhaltungen:
- CH-A- 409 542
- DE-A- 2 729 927
- US-A- 3 054 276

## Beschreibung

Die Erfindung betrifft eine elastische Wellenkupplung zum mechanischen Übertragen eines Drehmoments zwischen einem Motor und einem Getriebe in einer Ausführung gemäß dem Oberbegriff des Patentanspruchs 1.

Eine solche Wellenkupplung ist bekannt. Sie wird besonders für Schiffsantriebe in Verbindung mit einer Gelenkwelle mit wenigstens einem Kreuzgelenk eingesetzt. Dabei ist man bestrebt, die elastische Wellenkupplung so zu gestalten, daß ein Drucklager zur Abstützung der Gelenkwelle vermieden werden kann, um so Schallübertragungen auf den Schiffsrumpf zu vermeiden. Bei einer aus der DE 27 29 927 A1 Wellenkupplung dieser Art ist in jeder Hälfte des Dämpfungsgliedes im elastischen Ringkörper ein metallischer Mittenring eingebettet, der ohne starre Abstützung jeweils einen inneren und einen äußeren Gummiring miteinander verbindet. Untereinander sind die Mittenringe nicht verbunden, sie stehen vielmehr unter der Einwirkung der gegebenen Vorspannung der Gummiringe mit ihren Stirnseiten in flächiger Druckberührung. Da eine gegenseitige Zentrierung fehlt, können beim Zusammenbau radiale Verschiebungen auftreten, die während des Betriebes der Wellenkupplung unerwünschte Schwingungen hervorrufen können. Hier will die Erfindung Abhilfe schaffen.

Die Aufgabe der Erfindung besteht somit darin, bei einer elastischen Wellenkupplung dieser Art Vorkehrungen zu treffen, durch die eine selbsttätige Zentrierung und gegenseitige Verbindung der Mittenringe erzielbar ist, um so unerwünschte Unsymmetrien zu vermeiden.

Ausgehend von einer elastischen Wellenkupplung der eingangs erwähnten Art wird diese Aufgabe erfindungsgemäß dadurch gelöst, daß die metallischen Mittenringe an ihren aneinanderliegenden Stirnseiten durch einen in fluchtenden Ringnuten einliegenden Paßring oder dergleichen miteinander zentriert sind.

Die vorgeschlagene Zentrierung der Mittenringe ist konstruktiv einfach ausgebildet und hat darüber hinaus den Vorteil, daß bei der Montage die Zentrierung selbsttätig bewirkt wird, ohne daß der Zusammenbau in irgendeiner Weise erschwert wird.

Vorteilhafte Weiterbildungen der Erfindung gehen aus den Unteransprüchen hervor.

Die beiden Gummiringe jeder Hälfte werden zweckmäßigerweise so geformt, daß vor dem Zusammenbau der beiden Hälften die Mittenringe gegenüber den zugehörigen metallischen Außen- und Innenringe axial in Richtung zueinander vorstehen. Bei der gegenseitigen Verspannung der beiden Hälften werden die Mittenringe axial nach außen gedrückt und als Folge hiervon die Gummiringe einer Verspannung ausgesetzt. Diese Verspannung führt zu einem Kupplungsaufbau mit erhöhter Dreh- und Kippsteifigkeit und ferner in Verbindung mit den konisch entgegengesetzt orientierten Gummiringen zu einer starken Zentrierwirkung der beiden Hälften des Dämpfungsgliedes. Dank dieser Zentrierwirkung kann die Wellenkupplung ein Kreuzgelenk, wenn sein Gelenkpunkt in der Symmetrieebene des elastischen Dämpfungsgliedes liegt, ohne ein mechanisches Stützlager führen. Damit wird die Übertragung von Motorschall auf den Schiffsrumpf oder dergleichen vermieden.

Eine andere vorteilhafte Weiterbildung der Erfindung bezieht sich auf die Art der Befestigung eines Kreuzgelenks an der elastischen Wellenkupplung. Die hierzu vorgeschlagene Lösung besteht darin, daß der motorseitige metallische Innenring der Wellenkupplung an seiner freien Stirnseite mit einer umlaufenden Vertiefung ausgestattet ist, die zur zentrischen Aufnahme einer Scheibe mit einem daran befestigten Gabelflansch eines üblichen Kreuzgelenks dient.

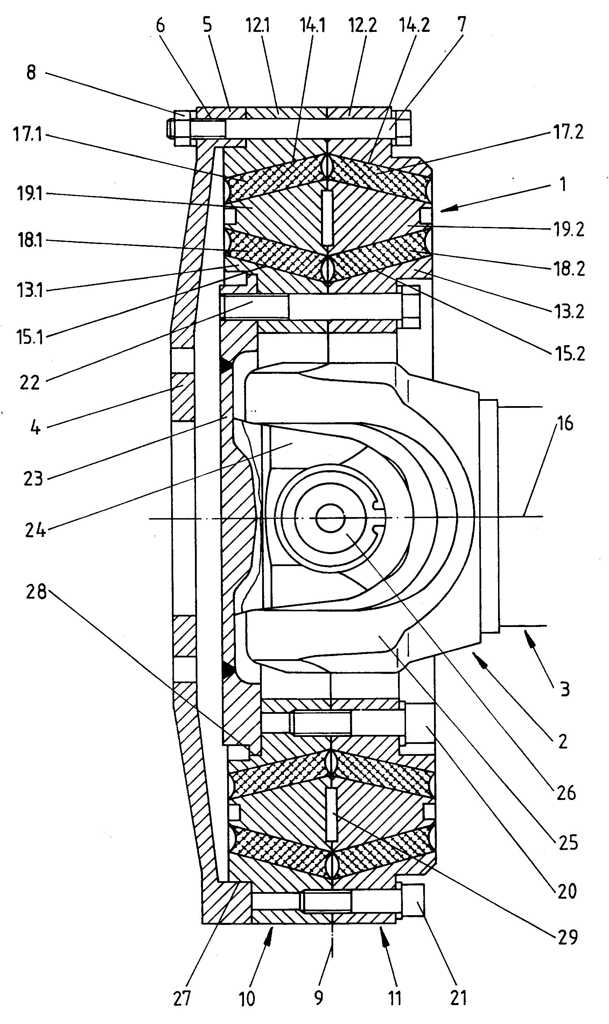

Ein Ausführungsbeispiel der Erfindung ist in der Zeichnung schematisch dargestellt und wird nachfolgend näher erläutert. Die einzige Zeichnung zeigt eine elastische Wellenkupplung gemäß der Erfindung in einem Axialschnitt in Verbindung mit einem angebauten Kreuzgelenk.

Die in der Zeichnung veranschaulichte Wellenkupplung mit einem Dämpfungsglied 1 ist für einen Anbau an einen nicht dargestellten Motor oder Antrieb (auf der linken Seite) und für einen innenliegenden Anschluß eines Kreuzgelenkes 2 einer weiterführenden Gelenkwelle 3 ausgebildet. Als Bindeglied zwischen Motor bzw. Antrieb und Dämpfungsglied 1 ist eine relativ flache Scheibe 4 mit einem am äußeren Rand angeformten Ringansatz 5 vorgesehen. Im Bereich des Ringansatzes (5) sind über den ganzen Umfang mit gleichem Abstand voneinander verteilt Bohrungen (6) enthalten, die zur Aufnahme von Schraubenbolzen (7) dienen, mittels der Dämpfungsglied (1) und Scheibe (4) miteinander verspannt werden. Bei dem Ausführungsbeispiel wird das Erzeugen der Spannkraft durch Muttern (8) bewirkt, die jeweils auf einen überstehenden Gewindeabschnitt der Befestigungsschrauben (7) aufgeschraubt sind.

Das Dämpfungsglied (1) ist aus zwei hinsichtlich der Funktionsteile in bezug auf die Trennebene (9) spiegelbildlich symmetrisch ausgebildeten Hälften (10, 11) zusammengesetzt. Nachfolgend wird der Aufbau der linken Hälfte beschrieben.

Die starren Teile auf der Antriebs- und Abtriebsseite bestehen aus einem metallischen Außenring (12.1) und einem metallischen Innenring (13.1). Die einander gegenüberstehenden Mantelflächen (14.1 bzw. 15.1) dieser beiden Ringe verlaufen entgegengesetzt geneigt zur Drehachse (16). An jeder Mantelfläche (14.1 bzw. 15.1) ist ein in seiner Formgestaltung der Neigung angepaßter Gummiring (17.1 bzw. 18.1) anvulkanisiert. Den Freiraum zwischen den geneigten Gummiringen (17.1 und 18.1) füllt ein metallischer Mittenring (19.1) mit konusförmigem Querschnitt aus, der an seiner äußeren und inneren Mantelfläche mit dem jeweiligen Gummiring (17.1 bzw. 18.1) ebenfalls durch Vulkanisieren fest verbunden ist.

Die andere Hälfte (11) des Dämpfungsgliedes (1) hat hinsichtlich der für das Drehmoment wesentlichen Funktionsteile den gleichen Aufbau. Der Zusammenbau der Hälften (10, 11) erfolgt in bezug auf die Trennebene (9) in spiegelbildlicher Anordnung wie es in der Zeichnung dargestellt ist. Die wesentlichen Teile der rechten Hälfte (11) sind mit den gleichen Bezugszahlen bezeichnet, wobei zur Unterscheidung bei den Teilen der linken Hälfte (10) jeweils die Ziffer 1 und bei den Teilen der rechten Hälfte (11) jeweils die Ziffer 2 hinter einem Punkt hinzugefügt ist.

Die gegenseitige Verspannung der beiden Hälften (10, 11) wird durch Gewindeschrauben (20) auf einem inneren Teilkreis und Gewindeschrauben (21) auf einem äußeren Teilkreis bewirkt. Der äußere Teilkreis fällt zusammen mit dem Teilkreis für die Befestigungsschrauben (7). Auch auf dem inneren Teilkreis sind weitere Bohrungen für die Aufnahme von Befestigungschrauben (22) enthalten. Mit Hilfe einer Anzahl von Schrauben (22) wird am metallischen Innenring (13.1) außen eine kreisrunde Scheibe (23) verspannt, die die motorseitige Gabel (24) des Kreuzgelenks (2) trägt. Die andere, getriebeseitige Gabel (25) steht in bekannter Weise über einen Kreuzkopf (26) mit der Gabel (24) in drehfester, jedoch begrenzt winkelgelenkiger Verbindung.

Zum Zwecke der Zentrierung der Anbauteile (4) einerseits und (23) andererseits enthält der metallische Außenring (12.1) eine umlaufende Eindrehung (27) und der metallische Innenring (13.1) ebenfalls eine umlaufende Eindrehung (28).

Zur gegenseitigen Zentrierung der metallischen Mittenringe (19.1 und 19.2) können bekannte Mittel eingesetzt werden. Bei dem Ausführungsbeispiel ist an den aneinanderliegenden Stirnseiten je eine zentrische Ringnut gleicher radialer Breite vorgesehen, in denen ein Paßring (29) formschlüssig einliegt.

Wie die Zeichnung erkennen läßt, ist das Kreuzgelenk (2) mit seinem Gelenkpunkt in der Symmetrieebene (9) des Dämpfungsgliedes (1) angeordnet. Dank dieser Anordnung ist eine Abstützung der Gelenkwelle (3) durch ein besonderes Stützlager entbehrlich.

Durch eine einfache Maßnahme, nämlich ein Vorspannen der elastischen Gummiringe (17.1, 18.1 und 17.2, 18.2) kann deren Steifigkeit erhöht und damit die Zentrierwirkung der Vorrichtung verbessert werden.

Erzeugbar ist diese Vorspannung beispielsweise dadurch, daß die Gummiringe (17.1, 18.1 und 17.2, 18.2) derart formgestaltet werden, daß vor dem Zusammenbau der beiden Hälften (10, 11) die metallischen Mittenringe (19.1 bzw. 19.2) gegenüber den zugehörigen metallischen Außen- und Innenringen (12.1, 13.1 bzw. 12.2, 13.2) innen axial vorstehen. Bei der anschließenden gegenseitigen Verspannung der beiden Hälften (10, 11) mit Hilfe der Schrauben (20 und 21) werden so die metallischen Mittenringe (19.1 und 19.2) gegen die jeweils umgebenden Gummiringe (17.1, 18.1 bzw. 17.2, 18.2) gedrückt und bewirken so im Gummimaterial die Erzeugung einer gewünschten Vorspannung, die im Vergleich zu einem Dämpfungsglied mit nicht vorgespannten Gummiringen zu einer entsprechend erhöhten Steifigkeit in allen Richtungen führt.

## Patentansprüche

1. Elastische Wellenkupplung zum mechanischen Übertragen eines Drehmoments zwischen einem Motor und einem Getriebe, insbesondere als Vorschaltkupplung an einer Gelenkwelle, mit einem Dämpfungsglied aus wenigstens einem Gummiring und anvulkanisierten Metallteilen, wobei das Dämpfungsglied (1) aus zwei in Achsrichtung symmetrischen Hälften (10, 11) besteht, wobei jede Hälfte (10 bzw. 11) als Verbundkörper aufgebaut ist aus zwei konzentrischen Gummiringen (17.1 u. 18.1 bzw. 17.2 u. 18.2) in Konusform mit entgegengesetzten Neigungen, die je Hälfte (10 bzw. 11) mit ihren einander zugewandten Mantelflächen an einem gemeinsamen metallischen Mittenring (19.1 bzw. 19.2) und mit ihren Außenflächen an je einem metallischen Außen- bzw. Innenring (12.1 u. 13.1 bzw. 12.2 u. 13.2) anvulkanisiert sind, und wobei die Hälften (10 bzw. 11) mit den Basisseiten der konischen Mittenringe (19.1 bzw. 19.2) aneinanderliegen und an den Außen- und Innenringen (12.1 u. 13.1 bzw. 12.2 u. 13.2) durch Schrauben (20 bzw. 21) miteinander verspannt sind, dadurch gekennzeichnet, daß die metallischen Mittenringe (19.1 bzw. 19.2) an ihren aneinanderliegenden Stirnseiten durch einen in fluchtenden Ringnuten einliegenden Paßring (29) oder dergleichen miteinander zentriert sind.

2. Elastische Wellenkupplung nach Anspruch 1, dadurch gekennzeichnet, daß jeder metallische Mittenring (19.1 bzw. 19.2) vor dem Zusammenbau der beiden Hälften (10 bzw. 11) des Dämpfungsgliedes (1) gegenüber den zugehörigen metallischen Außen- und Innenringen (12.1 u. 13.1 bzw. 12.2 u. 13.2) axial vorsteht.

3. Elastische Wellenkupplung nach Anspruch 1 oder 2, dadurch gekennzeichnet, daß der (antriebsseitige) metallische Innenring (13.1) an der freien Stirnseite eine umlaufende Vertiefung (28) für die Aufnahme einer Scheibe (23) mit einem daran befestigten Gabelflansch (24) eines Kreuzgelenks (2) aufweist.

## Claims

1. Elastic shaft coupling for the mechanical transmission of a torque between a motor and a gearing, more especially as a pre-connected coupling on an articulated shaft, having a damping member composed of at least one rubber ring and metal parts which are vulcanized on, wherein the damping member (1) is composed of two halves (10 and 11) which are symmetrical in axial direction, wherein each half (10 or 11) is constructed as a compound body of two concentric rubber rings (17.1 and 18.1 or 17.2 and 18.2) of a conical shape with opposite inclines, which in the case of each half (10 or 11) are vulcanized with their surface areas facing each other on a common metallic centre ring (19.1 or 19.2), and with each of their outer surfaces are vulcanized on a metallic outer or inner ring (12.1 and 13.1 or 12.2 and 13.2), and wherein the halves (10 or 11) butt against each other with the base sides of the conical centre rings (19.1 or 19.2) and are clamped together by screws (20 or 21) on the outer and inner rings (12.1 and 13.1 or 12.2 and 13.2), characterised in that the metallic centre rings (19.1 or 19.2) are centred with each other at their adjacent front ends by a gauge ring (29) or the like which is lodged in flush annular grooves.

2. Elastic shaft as claimed in Claim 1, characterised in that each metallic centre ring (19.1 or 19.2), before assembly of the two halves (10 or 11) of the damping member (1), projects axially in relation to the appropriate metallic outer and inner rings (12.1 and 13.1 or 12.2. and 13.2).

3. Elastic shaft coupling as claimed in Claim 1 or Claim 2, characterised in that the (drive-sided) metallic inner ring (13.1) has at the free front end a circumferential cavity (28) for the acceptance of a disc (23) with a forked flange (24) of a swivel joint (2) which is fastened thereto.

## Revendications

1. Accouplement d'arbre élastique pour la transmission mécanique d'un couple entre un moteur et une transmission, notamment accouplement d'amont d'un arbre articulé, comprenant un organe d'amortissement constitué par au moins un anneau de caoutchouc et des éléments métalliques vulcanisés sur lui, l'organe d'amortissement (1) étant constitué par deux moitiés (10, 11) symétriques en direction axiale, chaque moitié (10 ou 11) étant constituée sous forme d'un corps composite à partir de deux anneaux de caoutchouc concentriques (17.1 et 18.1 ou 17.2 et 18.2) en forme de cônes dont l'inclinaison est opposée, chaque moitié (10 ou 11) étant vulcanisée par ses surfaces d'enveloppe tournées l'une vers l'autre sur un anneau métallique central commun (19.1 ou 19.2) et par ses surfaces externes sur un anneau métallique externe ou interne (12.1 et 13.1 ou 12.2 et 13.2), et les moitiés (10 ou 11) étant serrées l'une contre l'autre par des boulons (20 ou 21) en ayant les côtés de base des anneaux centraux coniques (19.1 ou 19.2) disposés l'un contre l'autre et sur les anneaux externes et internes (12.1 et 13.1 ou 12.2 et 13.2), caractérisé en ce que les anneaux métalliques centraux (19.1 ou 19.2) sont centrés l'un par rapport à l'autre sur leurs côtés frontaux qui sont disposés l'un contre l'autre par un anneau d'adaptation (29) ou analogue disposé dans des gorges annulaires en regard.

2. Accouplement d'arbre élastique selon la revendication 1, caractérisé en ce que chaque anneau métallique central (19.1 ou 19.2) fait saillie axialement avant assemblage des moitiés (10 ou 11) de l'organe d'amortissement (1) par rapport aux anneaux métalliques externes et internes associés (12.1 et 13.1 ou 12.2 et 13.2).

3. Accouplement d'arbre selon la revendication 1 ou 2, caractérisé en ce que l'anneau métallique interne (13.1) (situé du côté transmission) comprend sur son côté frontal libre un évidement périphérique (28) pour la réception d'un disque (23) comprenant une bride de fourchette (24) d'un joint de cardan (2) fixée sur lui.
